# EUROPEAN PATENT APPLICATION

(11) **EP 4 106 440 A1**
(43) Date of publication of application: **21.12.2022**
(21) Application number: 20918969.5
(22) Date of filing: 13.02.2020
(51) Int. Cl.: H04W 72/04

(54) **TERMINAL, BASE STATION, AND COMMUNICATION METHOD**

(71) Applicant: NTT DOCOMO, INC., Chiyoda-Ku Tokyo 100-6150 (JP)
(72) Inventor: TAKADA, Takuma, Tokyo 100-6150 (JP); UMEDA, Hiromasa, Tokyo 100-6150 (JP)
(74) Representative: Hoffmann Eitle
(86) International application number: PCT/JP2020/005677
(87) International publication number: WO 2021/161490

(57) **Abstract**

A terminal includes a control unit that prioritizes, when a first component carrier and a second component carrier forming a carrier aggregation are a band combination that does not support simultaneous transmission and reception by the terminal, data transmission and reception on a component carrier that is a primary cell or a primary secondary cell, between the first component carrier and the second component carrier; and a transmission and reception unit that executes data transmission and reception on the component carrier prioritized by the control unit.

## Description

### TECHNICAL FIELD

The present invention relates to a terminal, a base station, and a communication method in a radio communication system.

### BACKGROUND ART

When a carrier aggregation (CA: Carrier Aggregation) is performed, multiple component carriers (CC: Component Carrier) forming the carrier aggregation are assumed to be synchronized. Namely, a boundary of a radio frame in a first component carrier and a boundary of a radio frame in a second component carrier forming the carrier aggregation are assumed to match.

In practice, however, when the base station is installed, the geographical location of the first transmitting point for transmitting the first component carrier forming the carrier aggregation may not be situated at the same location as the geographical location of the second transmitting point for transmitting the second component carrier forming the carrier aggregation, as in the case of, for example, an extended base station 20 for which an optical communication line is adopted. Even if the geographical location of the first transmitting point for transmitting the first component carrier forming the carrier aggregation is situated at the same location as the geographical location of the second transmitting point for transmitting the second component carrier forming the carrier aggregation, these component carries may have different radio wave propagation paths. As a result, even if a first signal transmitted on the first component carrier and a second signal transmitted on the second component carrier are transmitted at the same timing from the transmission point, the timing at which the first signal reaches the terminal 10 may differ from the timing at which the second signal reaches the terminal 10.

### Related Art Document

### [Non-Patent Document]

Non-Patent Document 1: 3GPP TS 38.331 V15.8.0(2019-12)

### SUMMARY OF THE INVENTION

### [PROBLEM TO BE SOLVED BY THE INVENTION]

In the case of configuring carrier aggregation as described above, the maximum allowable value of a receive timing difference between CCs received by a terminal is specified as a maximum receive timing difference (MRTD).

There is a need for clarifying rules for data transmission and reception when CA is executed between CCs that do not support simultaneous transmission and reception by a terminal.

### [MEANS FOR SOLVING THE PROBLEM]

According to an aspect of the present invention, there is provided a terminal including a control unit that prioritizes, when a first component carrier and a second component carrier forming a carrier aggregation are a band combination that does not support simultaneous transmission and reception by the terminal, data transmission and reception on a component carrier that is a primary cell or a primary secondary cell, between the first component carrier and the second component carrier; and a transmission and reception unit that executes data transmission and reception on the component carrier prioritized by the control unit.

### [ADVANTAGE OF THE INVENTION]

According to an embodiment, rules for data transmission and reception are clarified when CA is executed between CCs that do not support simultaneous transmission and reception by a terminal.

### BRIEF DESCRIPTION OF DRAWINGS

FIG. 1 is a diagram illustrating an example of a configuration of a radio communication system according to an embodiment.
FIG. 2 is a diagram illustrating CA-*ParametersNR* that is an information element included in UE capability.
FIG. 3 is a diagram illustrating an example of a shift in reception timings for receiving radio frames between CCs at a terminal during CA.
FIG. 4 is a diagram illustrating an example of a functional configuration of a base station according to an embodiment.
FIG. 5 is a diagram illustrating an example of a functional configuration of a terminal according to an embodiment.
FIG. 6 is a diagram illustrating an example of a hardware configuration of the base station and the terminal according to an embodiment.

### [EMBODIMENTS OF THE INVENTION]

In the following, embodiments of the present invention are described with reference to the drawings. The embodiments described below are merely examples, and the embodiments to which the present invention is applied are not limited to the following embodiments.

It is assumed that a radio communication system in the following embodiments basically conform to LTE, but this is merely an example, and the radio communication system in the embodiments may partially or entirely conform to a radio communication system (for example, LTE-A, NR) other than the LTE.

### (Overall System Configuration)

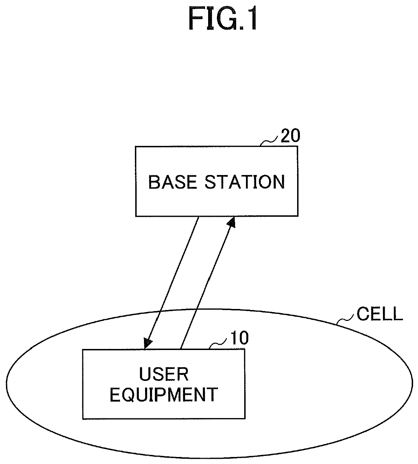

FIG. 1 illustrates a configuration diagram of the radio communication system according to the embodiments. As illustrated in FIG. 1, the radio communication system according to the embodiments includes a terminal 10 and a base station 20 (which may be a base station simulator). In FIG. 1, one piece of the terminal 10 and one piece of the base station 20 are illustrated, but this is an example, and a plurality of the terminals 10 and a plurality of the base stations 20 may be provided. Note that, in a case where a base station simulator is used instead of the base station 20, instead of configuring a cell as illustrated in FIG. 1, a test environment may be formed by connecting the base station simulator and the terminal 10 by using a coaxial cable or the like after placing a fading simulator, an attenuator, and the like that intervene between the base station simulator and the terminal 10.

The terminal 10 is a communication device such as a smart phone, a portable telephone, a tablet, a wearable terminal, and a communication module for machine-to-machine (M2M) which have a radio communication function. The terminal 10 is wirelessly connected to the base station 20, and utilizes various types of communication services provided by the radio communication system. The base station 20 is a communication device that provides one or more cells, and wirelessly communicates with the terminal 10.

In the embodiments, a duplex method may be a time division duplex (TDD) method or a frequency division duplex (FDD) method.

In addition, in the embodiments, a radio parameter or the like is "configured" or "specified" may mean that a predetermined value is preconfigured in the base station 20 or the terminal 10, a predetermined value is assumed to be preconfigured in the base station 20 or the terminal 10, or a radio parameter transmitted from the base station 20 or the terminal 10 is configured.

The base station 20 is a communication device that provides one or more cells to perform wireless communication with the terminal 10. The physical resources of radio signals are defined in the time domain and the frequency domain. The time domain may be defined in the number of OFDM symbols (i.e., slots, subframes, symbols, time resources shorter than the symbols, or the like), and the frequency domain may be defined in the number of subcarriers or the number of resource blocks. The base station 20 transmits synchronization signals and system information to the terminal 10. The synchronization signals are NR-PSS and NR-SSS, for example. A part of the system information is transmitted on the NR-PBCH, for example, and is also called broadcast information. The synchronization signal and broadcast information may be transmitted periodically as the SS block (SS/PBCH block) formed of a predetermined number of OFDM symbols. The base station 20 transmits a control signal or data to the terminal 10 in the downlink (DL), and receives a control signal or data in the uplink (UL) from the terminal 10. Both the base station 20 and the terminal 10 are capable of using beam forming to transmit and receive signals. Reference signals transmitted from the base station 20 include a channel state information reference signal (CSI-RS), and channels transmitted from the base station 20 include a physical downlink control channel (PDCCH) and a physical downlink shared channel (PDSCH).

In a case where carrier aggregation (CA: Carrier Aggregation) is performed between the base station 20 and the terminal 10, multiple component carriers (CC: Component Carrier) forming the carrier aggregation are assumed to be synchronized.

Namely, a boundary of a radio frame in a first component carrier and a boundary of a radio frame in a second component carrier forming the carrier aggregation are assumed to match. Note that the number of component carriers is not limited to 2, but may be 3 or more.

In practice, however, when the base station 20 is installed, the geographical location of the first transmitting point for transmitting the first component carrier forming the carrier aggregation may not be situated at the same location as the geographical location of the second transmitting point for transmitting the second component carrier forming the carrier aggregation, as in the case of, for example, an extended base station 20 for which an optical communication line is adopted.

Even if the geographical location of the first transmitting point for transmitting the first component carrier forming the carrier aggregation is situated at the same location as the geographical location of the second transmitting point for transmitting the second component carrier forming the carrier aggregation, these component carries may have different radio wave propagation paths. As a result, even if a first signal transmitted on the first component carrier and a second signal transmitted on the second component carrier are transmitted at the same timing from the transmission point, the timing at which the first signal reaches the terminal 10 may differ from the timing at which the second signal reaches the terminal 10.

In the case of configuring the carrier aggregation as described above, the maximum allowable value of a receive timing difference between CCs received at the terminal 10 is specified as a maximum receive timing difference (MRTD) at the 3GPP meeting.

Depending on the band combination of CA, the terminal 10 may not be able to perform transmission and reception simultaneously. The terminal 10 may use the UE capability (i.e., simultaneous Rx/Tx) to report, on a per band combination basis, whether the terminal 10 can simultaneously perform transmission and reception.

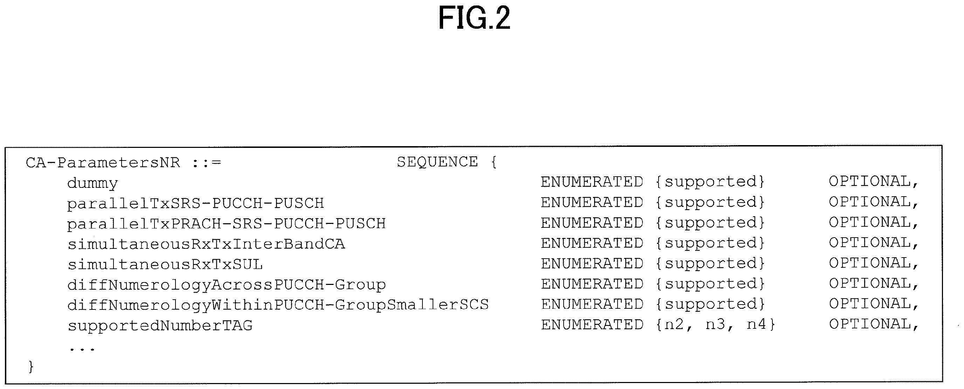

FIG. 2 is a diagram illustrating an example of *CA-ParametersNR* that is an information element included in the UE capability. The information element *CA-ParametersNR* includes a capability regarding carrier aggregation defined per band combination. If the parameter simultaneousRxTxInterBandCA is set in the information element *CA-ParametersNR* for a band combination of the carrier aggregation, the terminal 10 can simultaneously perform transmission and reception in this band combination.

### (Problem)

During CA, even if a difference in reception timings of radio frames between the CCs at the terminal 10 exceeds the MRTD, which results in the degradation of reception characteristics of the terminal 10, communication by the CA is in some cases more effective than communication by a single carrier.

As described above, during the CA, if the communication by the CA can be assumed to be more effective than communication by a single carrier despite the fact that a difference in reception time of the radio frames between the CCs at the terminal 10 exceeds the MRTD, it is desirable to be able to dynamically control whether to implement CA at the base station 20. In order to dynamically control whether to implement CA at the base station 20, it is desirable for the base station 20 to be able to keep track of a difference in reception timings of the radio frames between CCs at the terminal 10.

Accordingly, there is a need for a function to report, from the terminal 10 to the base station 20, a difference in reception timings of radio frames between CCs.

However, at present, the function to report, from the terminal 10 to the base station 20, a difference in reception timings of radio frames between CCs is not defined.

Accordingly, in the case of executing CA in the present circumstances, the value of the MRTD is estimated at the time of installing the base station 20, and, then, the estimated value of the MRTD is used to determine whether the area of the base station 20 is a feasible area for implementing CA.

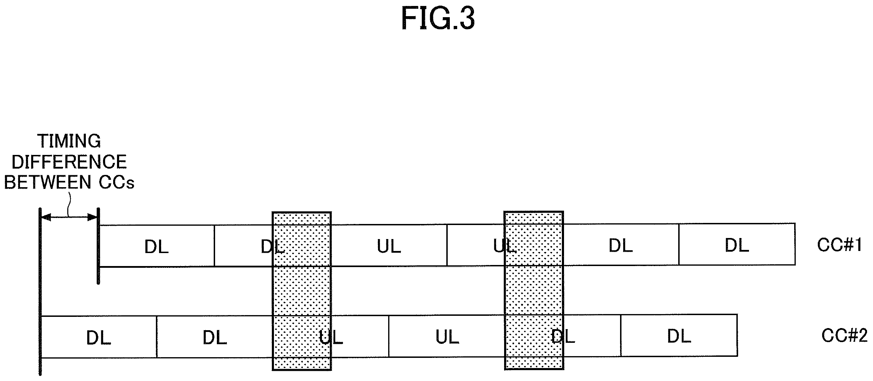

FIG. 3 is a diagram illustrating an example of a shift in reception timings of radio frames between CCs at the terminal 10 during CA. In the example illustrated in FIG. 3, TDD is applied in both of the two component carriers that form the CC. In this case, if reception timings of the radio frames are shifted between the CCs, a case can be considered in which uplink (UL) overlaps downlink (DL) between the CCs, as illustrated in the example of FIG. 3. In this case, for a band combination that does not support simultaneous transmission and reception by the terminal 10, the terminal 10 can only perform either UL transmission or DL reception. In such a case, no rules are explicitly defined as to whether the terminal 10 is to prioritize UL transmission or DL reception. When CA is executed between the CCs having a difference greater than or equal to MRTD, it is unclear how greatly the transmission and reception of data is affected.

### (Proposal 1)

In the case of executing carrier aggregation, a function to report from the terminal 10 to the base station 20 a difference in reception timings of radio frames between CCs may be defined.

For example, a system frame number (SFN) and frame boundary timing difference (SFTD) measurement/report scheme may be used as the function to report from the terminal 10 to the base station 20 a difference in reception timings of radio frames between the CCs.

Here, the SFTD is a function that allows the terminal 10 to report the SFN and frame timing upon request from a target candidate PSCell in order to configure the SMTC window (SSB-based RRM measurement timing configuration window) in the PSCell before configuring dual connectivity. The SFTD is supposed to be used primarily in asynchronous networks.

When the terminal 10 reports a difference in reception timings of radio frames between CCs to the base station 20, the terminal 10 may report the difference together with a measurement report regarding the relevant CCs, or may report it separately. Furthermore, when the terminal 10 reports the difference in reception timings of the radio frames between CCs to the base station 20, the measurement period may be periodic or aperiodic. The base station 20 may configure whether the measurement period is periodic or aperiodic (which may be configured for the terminal 10 by using RRC signaling from the base station 20).

When carrier aggregation has already been executed, the terminal 10 may select the CCs forming the carrier aggregation as the CCs to be measured.

When carrier aggregation has not been executed, the terminal 10 may measure a difference in reception timings of radio frames between a different frequency set by *measobjectNR* and a serving cell.

The CCs to be measured may be reported to the terminal 10 in advance (i.e., configured in advance) by the base station 20.

### (Proposal 2)

Rules for data transmission and reception may be clarified for the case in which CA is executed using CCs that do not support simultaneous transmission and reception by the terminal.

For example, in the case in which a band combination forming the CA is the band combination that does not support simultaneous transmission and reception at the terminal 10, the terminal 10 may prioritize the transmission and reception of data on the CC that is either the PCell (primary cell) or the PSCell (primary secondary cell), regardless of whether the portion overlapping between the CCs is UL transmission or DL reception.

For example, in the case in which a band combination forming the CA is the band combination that does not support simultaneous transmission and reception at the terminal 10, the terminal 10 may prioritize UL transmission or DL reception based on whether information needed to transmit and receive data, such as a reference signal and/or a control channel, has been acquired. For example, when the terminal 10 is unable to receive PDCCH and/or Tracking RS, the terminal 10 may prioritize the UL transmission.

For example, the terminal 10 may report to the base station 20 a difference in reception timings of radio frames between the CCs. The base station 20 may perform scheduling control by taking into consideration the difference in reception timings of radio frames between the CCs and the priority levels of the DL transmission and the UL reception at that moment.

In the above-described embodiments, the number of CCs is not limited to 2, and the number of CCs may be three or more. When carrier aggregation is formed by a PCell, an SCell-1, and an SCell-2, the terminal 10 may measure a difference between the timing at which the terminal 10 receives a radio frame in the PCell and the timing at which the terminal 10 receives a radio frame in the SCell-1, and may also measure a difference between the timing at which the terminal 10 receives a radio frame in the PCell and the timing at which the terminal 10 receives a radio frame in the SCell-2. For example, when a difference between the timing at which the terminal 10 receives a radio frame in the SCell-1 and the timing at which the terminal 10 receives a radio frame in the SCell-2 is less than the difference between the timing at which the terminal 10 receives a radio frame in the PCell and the timing at which the terminal 10 receives a radio frame in the SCell-1, and is also less than the difference between the timing at which the terminal 10 receives a radio frame in the PCell and the timing at which the terminal 10 receives a radio frame in the SCell-2, carrier aggregation may be performed by changing the PCell to either one of the SCell-1 and the SCell-2.

### (Device configuration)

In the following, examples of functional configuration of the terminal 10 and the base station 20 that execute the above-described processing operation are described. The terminal 10 and the base station 20 include all the functions described in the embodiments. However, it suffices for the terminal 10 and the base station 20 to include only a portion of the functions described in the embodiments.

### <Terminal>

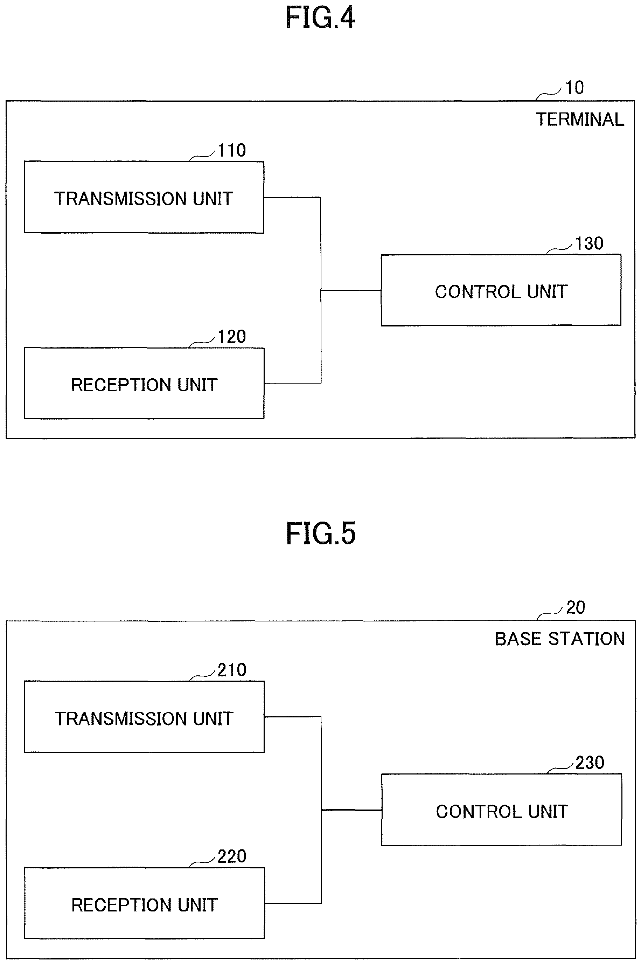

FIG. 4 is a diagram illustrating an example of the functional configuration of the terminal 10. As illustrated in FIG. 4, the terminal 10 includes a transmission unit 110, a reception unit 120, and a control unit 130. The functional configuration shown in FIG. 4 is only an example. The manner of function segmentation and the names of functional blocks do not matter as long as the operations of the embodiments can be performed.

The transmission unit 110 generates transmission signals from transmission data, and transmits the transmission signals wirelessly. The reception unit 120 receives various signals wirelessly, and acquires higher-layer signals from the received physical-layer signals. The reception unit 120 includes a measuring unit that measures a received signal to acquire a reception power and the like.

The control unit 130 controls the terminal 10. The function of the control unit 130 relating to transmission may alternatively be included in the transmission unit 110, and the function of the control unit 130 relating to reception may alternatively be included in the reception unit 120.

In the case of carrier aggregation being configured by CC1 and CC2, for example, the control unit 130 of the terminal 10 may measure a difference between the timing at which the reception unit 120 receives a radio frame on the CC1 and the timing at which the reception unit 120 receives a radio frame on the CC2. The transmission unit 110 of the terminal 10 may transmit to the terminal 10 information indicative of the difference between the timing at which a radio frame is received on the CC1 and the timing at which a radio frame is received on the CC2, as measured by the control unit 130.

In the case in which the band combination forming the CA is the one which does not support simultaneous transmission and reception by the terminal 10, for example, the control unit 130 of the terminal 10 may prioritize the transmission and reception of data on the CC that is either a PCell or PSCell, regardless of whether the portion overlapping between the CCs is UL transmission or DL reception.

### <Base station 20>

FIG. 5 is a diagram illustrating an example of the functional configuration of the base station 20. As illustrated in FIG. 5, the base station 20 includes a transmission unit 210, a reception unit 220, and a control unit 230. The functional configuration shown in FIG. 5 is only an example. The manner of function segmentation and the names of functional blocks do not matter as long as the operations according to the embodiments can be performed.

The transmission unit 210 has the function to generate a signal to be transmitted to the terminal 10 and to transmit the signal wirelessly. The reception unit 220 has the function to receive various signals transmitted from the terminal 10 and to acquire higher-layer information, for example, from the received signals. The reception unit 220 includes a measuring unit that measures a received signal to acquire a reception power and the like.

The control unit 230 controls the base station 20. The function of the control unit 230 relating to transmission may alternatively be included in the transmission unit 210, and the function of the control unit 230 relating to reception may alternatively be included in the reception unit 220.

In the case of carrier aggregation being configured by CC1 and CC2, for example, the reception unit 220 of the base station 20 may receive information indicating a difference between the timing at which the terminal 10 receives a radio frame on the CC1 and the timing at which the terminal 10 receives a radio frame on the CC2.

In the case in which the band combination forming the CA is the one which does not support simultaneous transmission and reception by the terminal 10, for example, the control unit 230 of the base station 20 may prioritize the transmission and reception of data on the CC that is either a PCell or PSCell, regardless of whether the portion overlapping between the CCs is UL reception or DL transmission.

### <Hardware configuration>

The block diagrams (FIG. 4 to FIG. 5) used for the description of the above embodiments illustrate blocks of functional units. These functional blocks (components) are implemented by any combination of at least one of hardware or software. In addition, the implementation method of each functional block is not particularly limited. That is, each functional block may be implemented using a single device that is physically or logically combined, or may be implemented by directly or indirectly connecting two or more devices that are physically or logically separated (e.g., using wire or radio) and using these multiple devices. The functional block may be implemented by combining software with the above-described one device or the above-described plurality of devices. Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmission unit. In either case, as described above, the implementation method is not particularly limited.

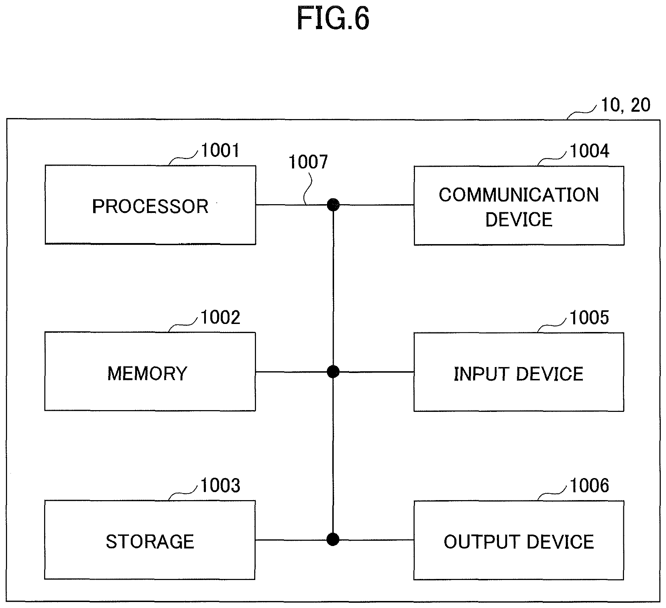

For example, the terminal 10 and the base station 20 according to the embodiments of the present invention may function as computers performing the process of the radio communication according to the embodiments of the present invention. FIG. 6 is a diagram illustrating an example of a hardware configuration of the terminal 10 and the base station 20 according to the embodiment. Each of the above-described terminal 10 and the base station 20 may be physically configured as a computer device including a processor 1001, a memory 1002, a storage 1003, a communication device 1004, an input device 1005, an output device 1006, a bus 1007, or the like.

Note that, in the following description, the term "device" can be replaced with a circuit, a device, a unit, or the like. The hardware configuration of the terminal 10 and the base station 20 may be configured to include one or more of the devices depicted in the figures, which are indicated by 1001 through 1006, or may be configured without some devices.

Each function of the terminal 10 and the base station 20 is implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, or the like. For example, the above-described base band signal processor 104, call processor 105, or the like may be implemented by the processor 1001.

Additionally, the processor 1001 reads a program (program code), a software module, data, or the like from at least one of the storage 1003 and the communication device 1004 to the memory 1002, and executes various processes according to these. As the program, a program is used which causes a computer to execute at least a part of the operations described in the above-described embodiment. For example, the control unit 130 of the terminal 10 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a Read Only Memory (ROM), an Erasable Programmable ROM (EPROM), an Electrically Erasable Programmable ROM (EEPROM), and a Random Access Memory (RAM). The memory 1002 may be referred to as a register, a cache, a main memory (main storage device), or the like. The memory 1002 may store a program (program code), a software module, or the like, which can be executed for implementing the radio communication method according to the embodiments of the present disclosure.

The storage 1003 is a computer readable storage medium and may be formed of, for example, at least one of an optical disk, such as a Compact Disc ROM (CD-ROM), a hard disk drive, a flexible disk, an optical magnetic disk (e.g., a compact disk, a digital versatile disk, a Blu-ray (registered trademark) disk), a smart card, a flash memory (e.g., a card, a stick, a key drive), a floppy (registered trademark) disk, or a magnetic strip. The storage 1003 may be referred to as an auxiliary storage device. The above-described storage medium may be, for example, a database including at least one of the memory 1002 and the storage 1003, a server, or any other suitable medium.

The communication device 1004 is hardware (transmitting and receiving device) for performing communication between computers through at least one of a wired network and a wireless network, and is also referred to, for example, as a network device, a network control unit, a network card, a communication module, or the like. The communication device 1004 may be configured to include, for example, a high frequency switch, a duplexer, a filter, a frequency synthesizer, or the like to implement at least one of frequency division duplex (FDD: Frequency Division Duplex) and time division duplex (TDD: Time Division Duplex). For example, the above-described transmission unit 110, reception unit 120, and the like may be implemented by the communication device 1004. Furthermore, the transmission unit 110 and the reception unit 120 may be implemented to be physically or logically separated.

The input device 1005 is an input device (e.g., a keyboard, mouse, microphone, switch, button, or sensor) that receives an external input. The output device 1006 is an output device (e.g., a display, speaker, or LED lamp) that implements an external output. The input device 1005 and the output device 1006 may have an integrated configuration (for example, a touch panel).

Each device, such as the processor 1001 and the memory 1002, is also connected by the bus 1007 for communicating information. The bus 1007 may be formed of a single bus or may be formed of different buses between devices.

The terminal 10 and the base station 20 may each include hardware, such as a microprocessor, a digital signal processor (DSP: Digital Signal Processor), an Application Specific Integrated Circuit (ASIC), a Programmable Logic Device (PLD), and a Field Programmable Gate Array (FPGA), which may implement some or all of the functional blocks. For example, processor 1001 may be implemented using at least one of these hardware components.

### (Conclusion of the embodiments)

In this specification, at least the following terminal, base station, and communication method are disclosed.

A terminal including a control unit that prioritizes, when a first component carrier and a second component carrier forming a carrier aggregation are a band combination that does not support simultaneous transmission and reception by the terminal, data transmission and reception on a component carrier that is a primary cell or a primary secondary cell, between the first component carrier and the second component carrier; and a transmission and reception unit that executes data transmission and reception on the component carrier prioritized by the control unit.

According to the above-described configuration, when a timing of UL transmission and a timing of DL reception by the terminal overlap in a band combination that does not support simultaneous transmission and reception by the terminal, by prioritizing data transmission and reception on a component carrier that is the primary cell or the primary secondary cell, a collision between the UL transmission and DL reception by the terminal can be avoided.

A terminal including a control unit that prioritizes, when a first component carrier and a second component carrier forming a carrier aggregation are a band combination that does not support simultaneous transmission and reception by the terminal, uplink transmission if a reference signal and/or control information is not received; and a transmission unit that executes the uplink transmission prioritized by the control unit.

According to the above-described configuration, when a timing of UL transmission and a timing of DL reception by the terminal overlap in a band combination that does not support simultaneous transmission and reception by the terminal, by prioritizing the UL transmission, a collision between the UL transmission and DL reception by the terminal can be avoided.

A base station including a control unit that prioritizes, when a first component carrier and a second component carrier forming a carrier aggregation are a band combination that does not support simultaneous transmission and reception by the terminal, data transmission and reception on a component carrier that is a primary cell or a primary secondary cell, between the first component carrier and the second component carrier; and a transmission and reception unit that executes data transmission and reception on the component carrier prioritized by the control unit.

With the above configuration, when the timing of UL transmission and the timing of DL reception overlap at the terminal in the band combination that does not support simultaneous transmission and reception by the terminal, by prioritizing data transmission and reception on the component carrier that is the primary cell or the primary secondary cell, collision between UL transmission and DL reception at the terminal can be avoided.

A communication method executed by a terminal, the method including prioritizing, when a first component carrier and a second component carrier forming a carrier aggregation are a band combination that does not support simultaneous transmission and reception by the terminal, data transmission and reception on a component carrier that is a primary cell or a primary secondary cell, between the first component carrier and the second component carrier; and executing data transmission and reception on the prioritized component carrier.

According to the above-described configuration, when a timing of UL transmission and a timing of DL reception by the terminal overlap in a band combination that does not support simultaneous transmission and reception by the terminal, by prioritizing data transmission and reception on a component carrier that is the primary cell or the primary secondary cell, a collision between the UL transmission and DL reception by the terminal can be avoided.

### (Supplemental Embodiments)

While the embodiments of the present invention are described above, the disclosed invention is not limited to the embodiments, and those skilled in the art will appreciate various alterations, modifications, alternatives, substitutions, or the like. Descriptions are provided using specific numerical examples to facilitate understanding of the invention, but, unless as otherwise specified, these values are merely examples and any suitable value may be used. Classification of the items in the above descriptions is not essential to the present invention, and the items described in two or more items may be used in combination as needed, or the items described in one item may be applied (as long as there is no contradiction) to the items described in another item. The boundaries of functional units or processing units in the functional block diagram do not necessarily correspond to the boundaries of physical components. An operation by a plurality of functional units may be physically performed by one component or an operation by one functional unit may be physically executed by a plurality of components. For the processing procedures described in the embodiments, the order of processing may be changed as long as there is no contradiction. For the convenience of the description of the process, the terminal 10 and the base station 20 are described using functional block diagrams, but such devices may be implemented in hardware, software, or a combination thereof. Software operated by a processor included in the terminal 10 in accordance with the embodiments of the present invention and software operated by a processor included in the base station 20 in accordance with the embodiments of the present invention may be stored in a random access memory (RAM), a flash memory, a read-only memory (ROM), an EPROM, an EEPROM, a register, a hard disk (HDD), a removable disk, a CD-ROM, a database, a server, or any other suitable storage medium.

Notification of information is not limited to the aspects/embodiments described in the disclosure, and notification of information may be made by another method. For example, notification of information may be implemented by physical layer signaling (e.g., Downlink Control Information (DCI), Uplink Control Information (UCI), higher layer signaling (e.g., Radio Resource Control (RRC) signaling, Medium Access Control (MAC) signaling, broadcast information (Master Information Block (MIB), System Information Block (SIB))), or other signals or combinations thereof. RRC signaling may be referred to as an RRC message, for example, which may be an RRC connection setup message, an RRC connection reconfiguration message, or the like.

The aspects/embodiments described in this disclosure may be applied to a system using at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), any other appropriate system, and a next generation system extended based on theses. Additionally, a plurality of systems may be combined (e.g., a combination of at least one of LTE and LTE-A and 5G) to be applied.

The processing procedures, sequences, flow charts, and the like of each aspect/embodiment described in this disclosure may be reordered, provided that there is no contradiction. For example, the methods described in this disclosure present elements of various steps in an exemplary order and are not limited to the particular order presented.

The particular operation described in this disclosure to be performed by the base station 20 may be performed by an upper node in some cases. It is apparent that in a network consisting of one or more network nodes having the base station 20, various operations performed for communicating with the terminal may be performed by at least one of the base station 20 and a network node other than the base station 20 (e.g., MME or S-GW can be considered, however, the network node is not limited to these). The case is exemplified above in which there is one network node other than the base station 20. However, the network node other than the base station 20 may be a combination of multiple other network nodes (e.g., MME and S-GW).

Input and output information may be stored in a specific location (e.g., memory) or managed using management tables. Input and output information may be overwritten, updated, or added. Output information may be deleted. The input information may be transmitted to another device.

The determination may be made by a value (0 or 1) represented by 1 bit, by a true or false value (Boolean: true or false), or by comparison of numerical values (e.g., a comparison with a predefined value).

The aspects/embodiments described in this disclosure may be used alone, in combination, or switched with implementation. Notification of predetermined information (e.g. "X" notice) is not limited to a method that is explicitly performed, and may also be made implicitly (e.g. "no notice of the predetermined information").

Software should be broadly interpreted to mean, regardless of whether referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, or the like.

Software, instructions, information, or the like may also be transmitted and received via a transmission medium. For example, when software is transmitted from a website, server, or other remote source using at least one of wireline technology (such as coaxial cable, fiber optic cable, twisted pair, digital subscriber line) and wireless technology (e.g., infrared or microwave), at least one of these wireline technology and wireless technology is included within the definition of a transmission medium.

The information, signals, or the like described in this disclosure may be represented using any of a variety of different techniques. For example, data, instructions, commands, information, signals, bits, symbols, chips, or the like which may be referred to throughout the above description may be represented by voltages, currents, electromagnetic waves, magnetic fields or magnetic particles, optical fields or photons, or any combination thereof.

The terms described in this disclosure and those necessary for understanding this disclosure may be replaced by terms having the same or similar meanings. For example, at least one of the channels and the symbols may be a signal (signaling). The signal may also be a message. Furthermore, a component carrier (CC: Component Carrier) may be referred to as a carrier frequency, a cell, a frequency carrier, or the like.

As used in this disclosure, the terms "system" and "network" are used interchangeably. The information, parameters, or the like described in the present disclosure may also be expressed using absolute values, relative values from predetermined values, or they may be expressed using corresponding separate information. For example, radio resources may be those indicated by an index.

The names used for the parameters described above are not restrictive in any respect. In addition, the mathematical equations using these parameters may differ from those explicitly disclosed in this disclosure. Since the various channels (e.g., PUCCH or PDCCH) and information elements can be identified by any suitable name, the various names assigned to these various channels and information elements are not in any way limiting.

In this disclosure, the terms "Base Station," "Radio Base Station," "Fixed Station," "NodeB," "eNodeB(eNB)," "gNodeB (gNB), " "Access Point," "Transmission Point," "Reception Point," "Transmission/Reception Point," "Cell," "Sector," "Cell Group," "Carrier," "Component Carrier," and the like may be used interchangeably. The base stations may be referred to in terms such as macrocell, small-cell, femto-cell, or pico-cell.

The base station can accommodate one or more (e.g., three) cells. Where the base station accommodates a plurality of cells, the entire coverage area of the base station can be divided into a plurality of smaller areas, each smaller area can also provide communication services by means of a base station subsystem (e.g., an indoor small base station (RRH) or a remote Radio Head). The term "cell" or "sector" refers to a portion or all of the coverage area of at least one of the base station and base station subsystem that provides communication services at the coverage.

In this disclosure, terms such as "mobile station (MS: Mobile Station)", "user terminal", "user equipment (UE: User Equipment)", "terminal", or the like may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of a base station and a mobile station may be referred to as a transmission unit, receiver, communication device, or the like. At least one of a base station and a mobile station may be a device installed in a mobile body, a mobile body itself, or the like. The mobile body may be a vehicle (e.g., a car or an airplane), an unmanned mobile (e.g., a drone or an automated vehicle), or a robot (manned or unmanned). At least one of a base station and a mobile station includes a device that does not necessarily move during communication operations. For example, at least one of a base station and a mobile station may be an Internet of Things (IoT) device such as a sensor.

In addition, the base station in the present disclosure may be replaced with the user terminal. For example, various aspects/embodiments of the present disclosure may be applied to a configuration in which communication between the base station and the user terminal is replaced with communication between multiple user terminals (e.g., may be referred to as Device-to-Device (D2D) or Vehicle-to-Everything (V2X)). In this case, a configuration may be such that the above-described function of the base station 20 is included in the terminal 10. The terms "up" and "down" may also be replaced with the terms corresponding to terminal-to-terminal communication (e.g., "side"). For example, an uplink channel, a downlink channel, or the like may be replaced with a sidelink channel. Similarly, the user terminal according to the present disclosure may be replaced with a base station. In this case, a configuration may be such that, the function included in the above-described terminal 10 may be included in the base station 20.

The term "connected" or "coupled" or any variation thereof means any direct or indirect connection or connection between two or more elements and may include the presence of one or more intermediate elements between two elements "connected" or "coupled" with each other. The coupling or connection between the elements may be physical, logical, or a combination of these. For example, "connection" may be replaced with "access". As used in the present disclosure, the two elements may be considered as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS (Reference Signal) or may be referred to as a pilot, depending on the standard applied.

As used in this disclosure, the expression "based on" does not mean "based on only" unless otherwise specified. In other words, the expression "based on" means both "based on only" and "at least based on."

As long as "include," "including," and variations thereof are used in this disclosure, the terms are intended to be inclusive in a manner similar to the term "comprising." Furthermore, the term "or" used in the disclosure is intended not to be an exclusive OR.

In the present disclosure, for example, if an article is added by translation, such as "a," "an," and "the" in English, the present disclosure may include that the noun following the article is plural.

In the present disclosure, the term "A and B are different" may imply that "A and B are different from each other." Note that the term may also imply "each of A and B is different from C." The terms, such as "separated" or "coupled," may also be interpreted similarly.

While the present invention is described in detail above, those skilled in the art will appreciate that the present invention is not limited to the embodiments described in this specification. The present invention may be implemented as modifications and variations without departing from the gist and scope of the present invention as defined by the claims. Accordingly, the description of this specification is for illustrative purposes only and is not intended to have any restrictive meaning with respect to the present invention.

### LIST OF REFERENCE SYMBOLS

- 10: terminal

- 110: transmission unit
- 120: reception unit
- 130: control unit
- 20: base station
- 210: transmission unit
- 220: reception unit
- 230: control unit
- 1001: processor
- 1002: memory
- 1003: storage
- 1004: communication device
- 1005: input device
- 1006: output device

## Claims

1. A terminal comprising:
a control unit that prioritizes, when a first component carrier and a second component carrier forming a carrier aggregation are a band combination that does not support simultaneous transmission and reception by the terminal, data transmission and reception on a component carrier that is a primary cell or a primary secondary cell, between the first component carrier and the second component carrier; and
a transmission and reception unit that executes data transmission and reception on the component carrier prioritized by the control unit.

2. A terminal comprising:
a control unit that prioritizes, when a first component carrier and a second component carrier forming a carrier aggregation are a band combination that does not support simultaneous transmission and reception by the terminal, uplink transmission if a reference signal and/or control information is not received; and
a transmission unit that executes the uplink transmission prioritized by the control unit.

3. A base station comprising:
a control unit that prioritizes, when a first component carrier and a second component carrier forming a carrier aggregation are a band combination that does not support simultaneous transmission and reception by the terminal, data transmission and reception on a component carrier that is a primary cell or a primary secondary cell, between the first component carrier and the second component carrier; and
a transmission and reception unit that executes data transmission and reception on the component carrier prioritized by the control unit.

4. A communication method executed by a terminal, the method comprising:
prioritizing, when a first component carrier and a second component carrier forming a carrier aggregation are a band combination that does not support simultaneous transmission and reception by the terminal, data transmission and reception on a component carrier that is a primary cell or a primary secondary cell, between the first component carrier and the second component carrier; and
executing data transmission and reception on the prioritized component carrier.
